# EUROPÄISCHE PATENTANMELDUNG

(11) **EP 3 135 480 A1**
(43) Veröffentlichungstag der Anmeldung: **01.03.2017**
(21) Anmeldenummer: 16185283.5
(22) Anmeldetag: 23.08.2016
(51) Int. Cl.: B32B 13/04, E04B 1/84, B32B 7/02, E04C 2/288, E04F 15/00, E04F 15/02

(54) **BODENPLATTE UND DARAUS HERGESTELLTER TROCKENHOHLBODEN BZW. DOPPELBODEN**

(30) Priorität: 24.08.2015 DE 202015104482 U
(71) Anmelder: Lindner Aktiengesellschaft Decken-, Boden-, Trennwandsysteme, 94424 Arnstorf (DE)
(72) Erfinder: DIRNBERGER, Christian, 94424 Arnstorf (DE)
(74) Vertreter: Klingseisen, Franz

(57) **Zusammenfassung**

Bodenplatte, aufweisend einen wenigstens dreischichtigen Aufbau mit zwei äußeren Schichten (1a, 1b) von höherer Dichte und einer dazwischen liegenden Schicht (1c) von geringerer Dichte gegenüber der höheren Dichte der zwei äußeren Schichten (1 a, 1b).

## Beschreibung

Die Erfindung betrifft eine Bodenplatte für Doppelbodensysteme und einen aus Bodenplatten aufgebauten Trockenhohlboden, bei dem die verlegten Platten auf Metallstütze aufliegen.

Bei einem Trockenhohlboden werden die Bodenplatten meist mit einer Trapezzinkenverzahnung dicht aneinander liegend und untereinander verklebt auf in der Höhe einstellbaren Metallstützen verlegt. Bei einem Doppelboden werden die Bodenplatten meist dicht aneinander liegend und auf in der Höhe einstellbaren Metallstützen so verlegt, dass einzelne Bodenplatten aus dem Verbund herausgenommen werden können, um den Hohlraum unter den Bodenplatten zugänglich zu machen. Die Metallstützen werden dabei auf dem Rohfußboden positioniert und stützen die Bodenplatten im Eckbereich über eine Metallplatte an der Metallstütze ab.

Der Erfindung liegt die Aufgabe zugrunde, die Trittschalldämmung zu verbessern.

Erfindungsgemäß wird dies durch einen wenigstens dreilagigen Aufbau einer Bodenplatte dadurch erreicht, dass zwischen zwei äußeren Lagen hoher Dichte eine dazwischen liegende Lage mit geringer Dichte vorgesehen wird, die als Dämmschicht für den Trittschall wirkt.

Gemäß einem Aspekt der Erfindung wird eine Bodenplatte vorgesehen, welche einen wenigstens dreischichtigen Aufbau aufweist mit zwei äußeren Schichten von höherer Dichte und einer dazwischenliegenden Schicht von geringerer Dichte gegenüber der höheren Dichte der zwei äußeren Schichten. Die äußeren Schichten bzw. Lagen sind damit aus einem Material mit vergleichsweise hoher Dichte realisiert im Verhältnis zu dem Material, welches für die dazwischenliegende Schicht bzw. Lage verwendet wird. Mit der so vorgesehenen Bodenplatte ist eine sandwich-förmig aufgebaute Bodenplatte bereitgestellt, welche mindestens aus drei Schichten, nämlich zwei äußeren Schichten und mindestens einer dazwischenliegenden Schicht besteht, wobei die Schichten spezifisch angepasst sind auf einer Optimierung der Trittschalldämmung derartiger Bodenplatten. Die äußeren Schichten aus einem höher verdichteten Material gewährleisten eine hohe Widerstandsfähigkeit gegenüber Abrieb und die dazwischenliegende Schicht aus einem Material von dem gegenüber geringerer Dichte verbessert im Zusammenwirken mit den beiden äußeren dichteren Schichten deutlich Schallschutzeigenschaft. Insbesondere wird mit der erfindungsgemäßen Bodenplatte eine Weiterleitung von einem Trittschall in Richtung zu den darunterliegenden Hohlräumen vermieden. Die erfindungsgemäße Bodenplatte ist spezifisch auf solche Anwendungsfälle hin optimiert, bei welchen sogenannte Trockenhohlböden aus zusammengekoppelten Bodenplatten hergestellt werden.

Gemäß einer vorteilhaften Ausgestaltung der Erfindung ist bei der Bodenplatte wenigstens eine der Schichten, d.h. der zwei äußeren Schichten und der mindestens einen dazwischenliegenden Schicht, aus Calciumsulfat realisiert. Calciumsulfat hat eine für die Trittschalldämmung günstige große Masse und die jeweiligen Dichtewerte der Schichten des Bodenplattenaufbaus können relativ leicht eingestellt werden.

Hinzukommen die günstigen Eigenschaften von Calciumsulfat hinsichtlich Brandschutz.

Gemäß einer weiteren vorteilhaften Ausgestaltung der Erfindung ist die Dichte der dazwischenliegenden mittleren Schicht von niederer Dichte im Bereich von 500 kg/m³ bis 1250 kg/m³ und liegt vorzugsweise in einem Bereich von 700 kg/m³ bis 1000 kg/m³, insbesondere im Bereich von 800 kg/m³.

Gemäß einem weiteren vorteilhaften Aspekt der Erfindung ist die Dichte der äußeren Schichten von höherer Dichte im Vergleich zu der Dichte der mittleren, dazwischenliegenden Schicht im Bereich von 1400 kg/m³ bis 1850 kg/m³ vorgesehen und liegt vorzugsweise in einem Bereich von 1500 kg/m³ bis 1700 kg/m³.

Gemäß einer weiteren vorteilhaften Ausgestaltung der Erfindung weist die Schicht von niedrigerer Dichte, d.h. die dazwischenliegende Schicht, eine größere Dickenabmessung als die beiden äußeren Schichten mit höherer Dichte auf. Mit einer in der Dicke vergrößerten mittleren Zwischenschicht und demgegenüber dünneren äußeren Schichten von höherer Dichte werden die Trittschalldämmungseigenschaften weiter optimiert. Die Bodenplatte ist noch besser schallisolierend im Vergleich zu herkömmlichen derartigen Bodenplatten. Gemäß einer weiteren vorteilhaften Ausgestaltung der Erfindung ist die Schicht von niedrigerer Dichte, d.h. die dazwischenliegende mittlere Schicht, doppelt so dick wie eine von den beiden äußeren Schichten. Die so deutlich dickere Zwischenschicht im Verhältnis zu den beiden äußeren Schichten hat eine sehr gute Eigenschaft hinsichtlich der Trittschalldämmung, wie es durch Untersuchungen der Erfinder sich ergeben hat. Überraschenderweise ist eine solche doppelte Dicke der in der Dichte niedrigeren Zwischenschicht besonders effektiv bei der Vermeidung von einer Erzeugung und Weiterleitung von störenden Schallgeräuschen.

Gemäß einer weiteren vorteilhaften Ausgestaltung der Erfindung weist die obere äußere Schicht den höchsten Dichtewert des Materials auf und die untere äußere Schicht weist einen demgegenüber geringeren Dichtewert auf, während die dazwischenliegende Schicht, welche zur Trittschalldämmung dient, den geringsten Dichtewert des sie bildenden Materials aufweist. Mit solch einer speziellen Abstufung der Dichtewerte der Materialien für die verschiedenen Schichten, einerseits der beiden äußeren Schichten mit höheren Dichten und andererseits der dazwischenliegenden mittleren Schicht, wird die Weiterleitung von Trittschallgeräuschen nach unten hin in den Hohlboden weiter verringert. Eine noch bessere Schalldämmung und Isolierung von Trittschallgeräuschen wird hierdurch erreicht.

Gemäß einer weiteren vorteilhaften Ausgestaltung der Erfindung sind die einzelnen Schichten durch eine Klebeschicht jeweils miteinander verbunden. Eine Herstellung der Bodenplatte wird hierdurch erleichtert. Die verschiedenen Schichten bzw. Lagen der Bodenplatte können in einem separaten Herstellungsschritt realisiert werden und anschließend mittels der Kleberschichten auf einfache Weise und je nach Bedarf in verschiedenen Varianten und Ausgestaltungen miteinander verbunden werden.

Gemäß einer weiteren vorteilhaften Ausgestaltung der Erfindung weisen die Schichten von vergleichsweise höherer Dichte eine größere Härte auf als die dazwischenliegende Schicht von niederer Dichte. Mit einer größeren Härte wird die Festigkeit der Bodenplatte weiter verbessert und eine langfristige Dauerhaftigkeit gewährleistet. Eine vorzeitige Abnutzung wird hierdurch effektiv verhindert.

Gemäß einer weiteren vorteilhaften Ausgestaltung der Erfindung weisen die Schichten von höherer Dichte eine Härte im Bereich von 10 HB (Härte nach Brinell) auf und die dazwischenliegende Schicht von niederer Dichte weist eine Härte im Bereich von 0,7 HB auf. Diese Werte der Härte der unterschiedlichen Schichten hat sich als sehr günstig aus Untersuchungen der Erfinder erwiesen, um die bezweckte Optimierung einer Trittschalldämmung weiter zu maximieren, ohne die Trittfestigkeit der Bodenplatte zu beeinträchtigen.

Gemäß einer weiteren vorteilhaften Ausgestaltung der Erfindung ist auf dem Außenumfang der Bodenplatte mindestens abschnittsweise eine Verzahnung ausgebildet. Mit solch einer Verzahnung lassen sich die einzelnen, im Hinblick auf die Trittschall optimierten Bodenplatten leicht miteinander koppeln und die Schalldämmungswirkung wird so auch in einem größeren Bereich eines Bodens, der mit solchen Bodenplatten verlegt wird, realisiert.

Gemäß einer weiteren Aspekt der Erfindung betrifft die Erfindung auch einen Trockenhohlboden- bzw. Doppelbodenaufbau, bei welchem ein Verbund von Bodenplatten auf Stützen über einem Rohrfußboden abgestützt ist, wobei der Doppelboden bzw. der Trockenhohlboden zumindest in einem Teilbereich des Bodens aus Bodenplatten gemäß einem der Ansprüche 1 bis 11 bzw. der vorgenannten Merkmale ausgebildet ist.

Die Erfindung wird beispielsweise anhand der Zeichnung näher erläutert. Es zeigen
- Fig. 1: im Querschnitt eine Bodenplatte, und
- Fig. 2: durch eine Metallstütze abgestützte Bodenplatten.

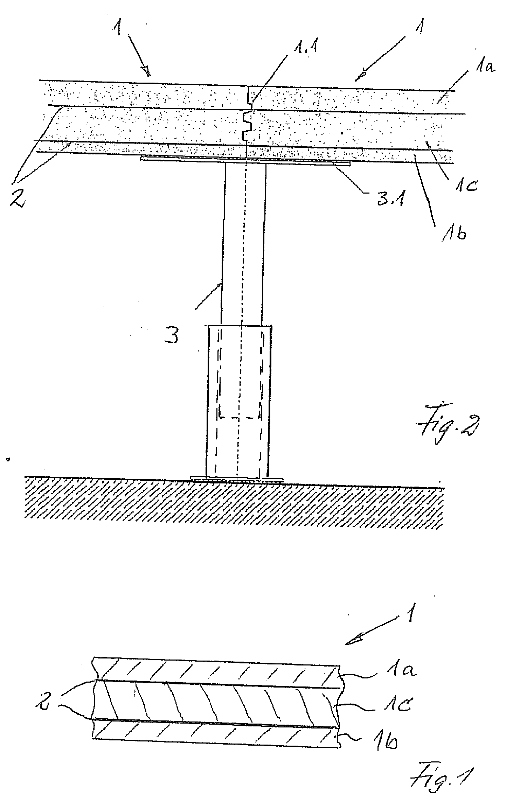

Fig. 1 zeigt im Querschnitt einen Plattenaufbau einer Bodenplatte 1, die drei Schichten aufweist. Die beiden äußeren Schichten 1a und 1b bestehen aus hochverdichtetem Material, während die dazwischen liegende Schicht 1c aus einem Material geringerer Dichte besteht. Die Dichte des Materials der Zwischenschicht 1c ist insbesondere eine geringere Dichte im Verhältnis zu der Dichte des Materials der beiden äußeren Schichten 1a und 1b. Durch die beiden hochverdichteten äußeren Platten 1a und 1 b wird eine hohe Belastbarkeit der Bodenplatte 1 erzielt, während die dazwischen liegende Schicht 1c den Trittschall dämmt.

Bevorzugt sind die beiden äußeren Schichten 1a und 1b in der Dicke kleiner ausgelegt als die dazwischen liegende schallschluckende Schicht 1c von geringerer Dichte. Beispielsweise ist die Dickenabmessung der schalldämmenden Schicht 1c etwa doppelt so groß wie die Dicke einer äußeren Schicht 1 a oder 1 b.

Die äußeren Schichten 1 a und 1 b haben bevorzugt die gleiche Dickenabmessung, sie können aber auch je nach Einsatzgebiet eine unterschiedliche Dicke haben.

Nach einem Ausführungsbeispiel beträgt die Dicke der Bodenplatte etwa 40 mm, wobei die beiden äußeren Schichten 1 a und 1 b jeweils 10 mm dick sind und die mittlere Schichte geringer Dichte 1c eine Dicke von 20 mm hat.

Bevorzugt besteht das Material der Bodenplatte 1 aus Calciumsulfat.
Es können aber auch andere Materialien verwendet werden.

Die Schichten hoher und niedriger Dichte werden vorzugsweise getrennt voneinander hergestellt und durch eine Kleberschicht 2 miteinander verbunden.

Die Dichte der hochverdichteten Calciumsulfatschichten 1 a und 1 b liegt im Bereich von 1400 kg/m³ bis 1850 kg/m³, bevorzugt im Bereich von 1500 kg/m³ bis 1700 kg/m³.
Zugleich liegt die Härte der hochverdichteten Calciumsulfatschichten 1a und 1b bei etwa 10 HB (Härte nach Brinell). Die Druckfestigkeit dieser hochverdichteten Schichten liegt bei etwa 15 N/mm².

Die Dichte der niedrig verdichteten Calciumsulfatschicht 1 c liegt im Bereich von
500 kg/m³ bis 1250 kg/m³, bevorzugt im Bereich von 700 kg/m³ bis 1000 kg/m³, insbesondere bei 800 kg/m³. Die Härte der Calciumsulfatschicht geringer Dichte liegt bei etwa 0,7 HB (Härte nach Brinell). Die Druckfestigkeit liegt dabei bei etwa 7 bis 9 N/mm².

Die in der Regel etwa 600 x 600 mm großen Bodenplatten haben auf dem Außenumfang vorzugsweise eine Verzahnung 1.1 für den Eingriff mit der Verzahnung auf einer benachbarten Platte, so dass sich ein dichter Verbund von Bodenplatten 1 ergibt, bei dem die Ecken der Platte 1 durch eine Metallplatte 3.1 einer Bodenstütze 3 abgestützt werden, wie Fig. 2 zeigt.

Wie in Fig. 2 schematisch wiedergegeben, erstreckt sich die Verzahnung 1.1 über die Dicke der Bodenplatte 1 unabhängig von der Dicke der einzelnen Schichten 1 a, 1b und 1 c. Mit anderen Worten wird die Verzahnung 1.1 auf dem Außenumfang der Bodenplatte 1 nach dem Verkleben der Schichten miteinander beispielsweise durch Fräsen ausgebildet.

Bei der Ausführung als Doppelboden entfällt die umlaufende Verzahnung, die durch eine glatte, jedoch schräge zur Plattenebene verlaufende Stirnfläche ersetzt ist, um ein leichtes Heuausnehmen und Einsetzen einer Doppelbodenplatte zu ermöglichen.

Eine erfindungsgemäße Bodenplatte 1 hat aufgrund der Kombination von unterschiedlich dichten Schichten sehr hohe Schallschutzeigenschaften, besonders im Hinblick auf Trittschallpegelminderung.

Durch die Zwischenlage 1c geringerer Dichte gegenüber der höheren Dichte der beiden Außenschichten 1 a und 1b wird eine Erhöhung des Verlustfaktors erzielt, wodurch bereits im Plattenaufbau selbst eine Anregung durch Schallwellen verringert wird. Dadurch wird die Ausbreitung angeregter Schallwellen (Körperschall und Luftschall) weiter reduziert.

Bei einem Plattenaufbau aus Calciumsulfat mit den zuvor angegebenen Parametern wird eine Trittschallpegelminderung von 24 dB (inklusive Trittschalldämmplättchen) erreicht. Ohne Trittschalldämmplättchen wird bereits eine Trittschallpegelminderung von 19 dB erreicht.

Bei Trittschalldämmungsplättchen handelt es sich um Gummiplättchen, die zwischen Metallstütze und Rohfußboden eingelegt werden.

Der Aufbau der beschriebenen Bodenplatten kann hinsichtlich Dicke der einzelnen Schichten und Dichte der einzelnen Schichten variieren.

Bei der Ausbildung eines Trockenhohlbodens bzw. Doppelbodens kann auch nur ein Teilbereich des Trockenhohlbodens bzw, Doppelbodens mit den erfindungsgemäßen Bodenplatten ausgebildet sein. Mit anderen Worten kann eine erfindungsgemäße Bodenplatte an eine herkömmliche Bodenplatte in einem Plattenverbund anschließen.

Es sind weitere Abwandlungen der beschriebenen Bauformen möglich. So kann in die Schicht 1c von geringerer Dichte zum Beispiel eine Schicht mit weiterer unterschiedlicher Dichte eingelagert sein, so dass sich insgesamt ein vierschichtiger Aufbau ergibt.

Nach einer anderen Ausführungsform können die Schichten 1a und 1b unterschiedlich dick ausgebildet sein, beispielsweise kann die obere Schicht 1 a dicker sein als die untere dichtere Schicht 1 b.

Ebenso können die einzelnen Schichten in ihrer Dichte variieren, so dass beispielsweise die obere Schicht den höchste Dichtewert aufweist, während die untere äußere Schicht 1b einen geringeren Dichtewert hat und die dazwischen liegende mittlere Dämmschicht 1c den geringsten Dichtewert aufweist.

Die Schichten können auch aus unterschiedlichem Material bestehen.

Der erfindungsgemäße Boden aus Schichten unterschiedlicher Dichte kann mit verschiedenen Oberflächenbelägen versehen werden, die zusätzlich trittschalldämmend wirken, wie beispielsweise elastische Beläge, Textilbeläge oder dgl.

Die Schichten 1a, 1c und 1b von unterschiedlicher Dichte haben insbesondere auch unterschiedliche Härtewerte. Die äußeren Schichten 1 a und 1 b von höherer Dichte sind härter als die dazwischen liegende Dämmschicht 1c, die einen geringeren Härtewert aufweist, wie oben angegeben.

Bevorzugt ist auch die Druckfestigkeit der Schichten unterschiedlicher Dichte unterschiedlich, wobei die Druckfestigkeit der Schichten höherer Dichte höher liegt als die Druckfestigkeit der als Dämmschicht wirkenden Zwischenschicht 1c, deren Druckfestigkeit etwa die Hälfte der Druckfestigkeit der höher verdichteten äußeren Schichten 1a und 1b betragen kann.

## Patentansprüche

1. Bodenplatte, aufweisend einen wenigstens dreischichtigen Aufbau mit zwei äußeren Schichten (1 a, 1 b) von höherer Dichte und einer dazwischen liegenden Schicht (1c) von geringerer Dichte gegenüber der höheren Dichte der zwei äußeren Schichten (1a, 1b).

2. Bodenplatte nach Anspruch 1, wobei wenigstens eine der Schichten aus Calciumsulfat besteht.

3. Bodenaufbau nach Anspruch 1 oder 2, wobei die Dichte der mittleren Schicht (1c) von niederer Dichte im Bereich von 500 kg/m³ bis 1250 kg/m³ liegt, bevorzugt im Bereich von 700 kg/m³ bis 1000 kg/m³, insbesondere im Bereich von 800 kg/m³.

4. Bodenplatte nach einem der vorhergehenden Ansprüche, wobei die Dichte der äußeren Schichten (1a, 1b) von höherer Dichte im Bereich von 1400 kg/m³ bis 1850 kg/m³ liegt, bevorzugt im Bereich von 1500 kg/m³ bis 1700 kg/m³.

5. Bodenplatte nach einem der vorhergehenden Ansprüche, wobei die Schicht (1c) von niedrigerer Dichte eine größere Dickenabmessung hat als die Schichten (1a, 1b) mit höherer Dichte.

6. Bodenplatte nach Anspruch 5, wobei die Schicht (1c) von niedrigerer Dichte doppelt so dick ist wie eine äußere Schicht (1a, 1b).

7. Bodenplatte nach einem der vorhergehenden Ansprüche, wobei die obere äußere Schicht (1a) den höchsten Dichtewert und die untere äußere Schicht (1b) einen geringeren Dichtewert aufweist, während die dazwischen liegende Dämmschicht (1c) den geringsten Dichtewert hat.

8. Bodenplatte nach einem der vorhergehenden Ansprüche, wobei die einzelnen Schichten (1a, 1b, 1 c) durch eine Kleberschicht (2) jeweils miteinander verbunden sind.

9. Bodenplatte nach einem der vorhergehenden Ansprüche, wobei die Schichten (1a, 1 b) höherer Dichte eine größere Härte haben als die Schicht (1 c) von niederer Dichte.

10. Bodenplatte nach Anspruch 9, wobei die Schichten (1 a, 1b) höherer Dichte eine Härte im Bereich um 10 HB (Härte nach Brinell) haben und die Schicht (1c) von niederer Dichte eine Härte im Bereich um 0,7 HB hat.

11. Bodenplatte nach einem der vorhergehenden Ansprüche, wobei auf dem Außenumfang der Bodenplatte (1) eine Verzahnung (1.1) ausgebildet ist.

12. Trockenhohlboden- bzw. Doppelbodenaufbau, bei dem ein Verbund von Bodenplatten (1) auf Stützen (3) über einem Rohfußboden abgestützt ist, wobei der Doppelboden bzw. Trockenhohlboden zumindest in einem Teilbereich aus Bodenplatten (1) nach einem der Ansprüche 1 bis 11 ausgebildet ist.
